Europäisches Patentamt

European Patent Office

Office européen des brevets

(19)

(11) Veröffentlichungsnummer: **0 163 915**
A2

## (12) EUROPÄISCHE PATENTANMELDUNG

(21) Anmeldenummer: 85105048.4

(22) Anmeldetag: 25.04.85

(51) Int. Cl.⁴: **H 02 J 3/14**

(30) Priorität: 03.05.84 CH 2149/84

(43) Veröffentlichungstag der Anmeldung: 11.12.85
Patentblatt 85/50

(84) Benannte Vertragsstaaten: **AT BE DE FR GB IT LU NL
SE**

(71) Anmelder: **Rupp, Hans Erich, Mühlestrasse 25,
CH-8803 Rüschlikon (CH)**

(72) Erfinder: **Rupp, Hans Erich, Mühlestrasse 25,
CH-8803 Rüschlikon (CH)**

(74) Vertreter: **Fillinger, Peter, Dr., Rütistrasse 1a,
CH-5400 Baden (CH)**

(54) Elektrische Hausinstallation.

(57) Die Hausinstallation weist einen Netzanschluß sowie Verbraucher (4, 51 bis 54), wie Lichtquellen, Haushaltgeräte und Heizkörper, auf. Um die Heizung mit möglichst geringem Leistungsanschlußwert betreiben zu können, ist vorgesehen, daß die Verbraucher einzeln oder in mehrere Gruppen zusammengefaßt und je über parallel angeordnete Schaltschütze (61 bis 64) am Netzanschluß angeschlossen sind. Jeder Schaltschütze (61 bis 64) ist mit seinem Steuereingang an den zugeordneten Ausgang einer die Leistung am Netzanschluß detektierenden Steuereinrichtung (7) angeschlossen. Diese Ausgänge der Steuereinrichtung (7) sind in abfallender Rangordnung geordnet. Beim Über- oder Unterschreiten eines Leistungsgrenzwertes beim Netzanschluß schaltet die Steuereinrichtung (7) die Verbraucher bzw. die Verbrauchergruppen (4, 61 bis 64) entgegengesetzt der Reihenfolge der Rangordnung ab bzw. zu.

Elektrische Hausinstallation

_____

Die vorliegende Erfindung bezieht sich auf eine elektrische Hausinstallation mit einem Netzanschluss und mit mehreren Verbrauchern, wie Lichtquellen, Haushaltgeräte und Heizkörper.

Solche Hausinstallationen sind aus jeder Wohnung und in jedem Haus vorhanden. Beim Bau des Hauses oder der Wohnung wird ihm bzw. ihr vom Elektrizitätswerk ein bestimmter Anschlusswert für die grösste erlaubte Leistung zugeteilt, die dann durch die Grösse der Hauptsicherung festgelegt wird. Dieser Anschlusswert beträgt für Wohnungen und Einfamilienhäuser 6 bis 15 KW. Dies maximale Leistung wird jedoch vom Wohnungsbenutzer nur selten in Anspruch genommen, z.B. dann wenn die Waschmaschine, der Kochherd und der Backofen gleichzeitig im Einsatz sind. Diese grösstmögliche Anschlussleistung würde indessen nicht genügen, um eine zentrale elektrische Speicherheizung zu betreiben, deren Speicher lediglich des nachts aufgeladen wird. Der Anschlusswert müsste erhöht werden, was eine starke Erhöhung der Anschlussgebühren zur Folge hätte. Anderseits würde aber diese zugeteilte Anschlussleistung ausreichen um die Wohnung bzw. das Haus mit elektrischen Direktheizkörpern zu beheizen, wenn die Wohnung bzw. das Haus nach den heute gültigen Normen isoliert ist.

- 3 -

Vielerorts ist es schwierig geworden, einen ausreichenden Anschlusswert bewilligt zu erhalten, der es erlaubt, nebst den Haushaltgeräten gleichzeitig eine Elektroheizung zu betreiben. Durch den wachsenden Stromkonsum sind heute bereits viele Stromnetze in den Spitzenzeiten bis zur Grenze ihrer Leistungsfähigkeit belastet. Neben den Spitzenzeiten sind aber noch genügend freie Kapazitäten für den Betrieb weiterer Elektroheizungen vorhanden, vorausgesetzt, diese Heizungen würden nicht zu einer weiteren Vergrösserung der Lastspitze beitragen.

Die vorliegende Erfindung stellt sich die Aufgabe, eine elektrische Hausinstallation mit Elektroheizung zu schaffen, die mit den heute üblicherweise von den Elektrizitätswerken zugeteilten Anschlusswerten auskommt und damit Spitzenbelastungen im öffentlichen Versorgungsnetz vermeidet.

Erfindungsgemäss wird diese Aufgabe dadurch gelöst, dass die Verbraucher einzeln oder in mehrere Gruppen zusammengefasst und je über parallel angeordnete Schaltschütze am Netzanschluss angeschlossen sind, dass jeder Schaltschütze mit seinem Steuereingang an einen zugeordneten Ausgang einer die Leistung am Netzanschluss detektierenden Steuereinrichtung angeschlossen ist, deren Ausgänge in abfallender Rangordnung geordnet sind, und dass die Steuereinrichtung beim Ueber- oder Unterschreiten eines Leistungsgrenzwertes beim Netzanschluss die Verbraucher bzw. die Verbrauchergruppen entgegengesetzt der Reihenfolge der Rangordnung ab- bzw. zuschaltet.

Die Erfindung hat den Vorteil, dass die Steuereinrichtung in Mikroprozessortechnik und daher preisgünstig und zuverlässig ausführbar ist. Die Steuereinrichtung schaltet die Heizgeräte in den einzelnen Räumen gemäss einer vorprogrammierten Rangordnung nacheinander aus bzw. zu, wenn starke Stromverbraucher, wie Waschmaschine, Tumbler, Elektroherd usw. zu- bzw. abgeschaltet werden. Das Abschalten erfolgt in der Rangordnung entgegengesetzter Reihenfolge: Z.B. wird zuerst die Heizung in der Garage, dann im Bastelraum, dann in den Schlafzimmern usw. ab und später (wenn der Grenzwert unterschritten wird) in der umgekehrten Reihenfolge wieder zugeschaltet. Waschmaschine, Tumbler, Elektroherd etc. sind aber nur selten länger als eine oder zwei Stunden in Betrieb, so dass sich die Unterbrechung der Stromzufuhr zur Heizung im Bastelraum oder im Schlafzimmer kaum auf die Raumtemperatur auswirkt. Damit die Raumtemperatur auch bei zweimaligem Gebrauch der Waschmaschine nicht beeinträchtigt wird, ist vorgesehen, dass wenigstens die Heizkörper bzw. Heizkörpergruppen die in Steuerverbindung mit den Steuerausgängen niedrigster Rangordnung stehen, mit einem Wärmespeicherelement ausgerüstet sind.

0163915

Anhand der beiliegenden schmatischen Zeichnung wird die Erfindung beispielsweise erläutert.

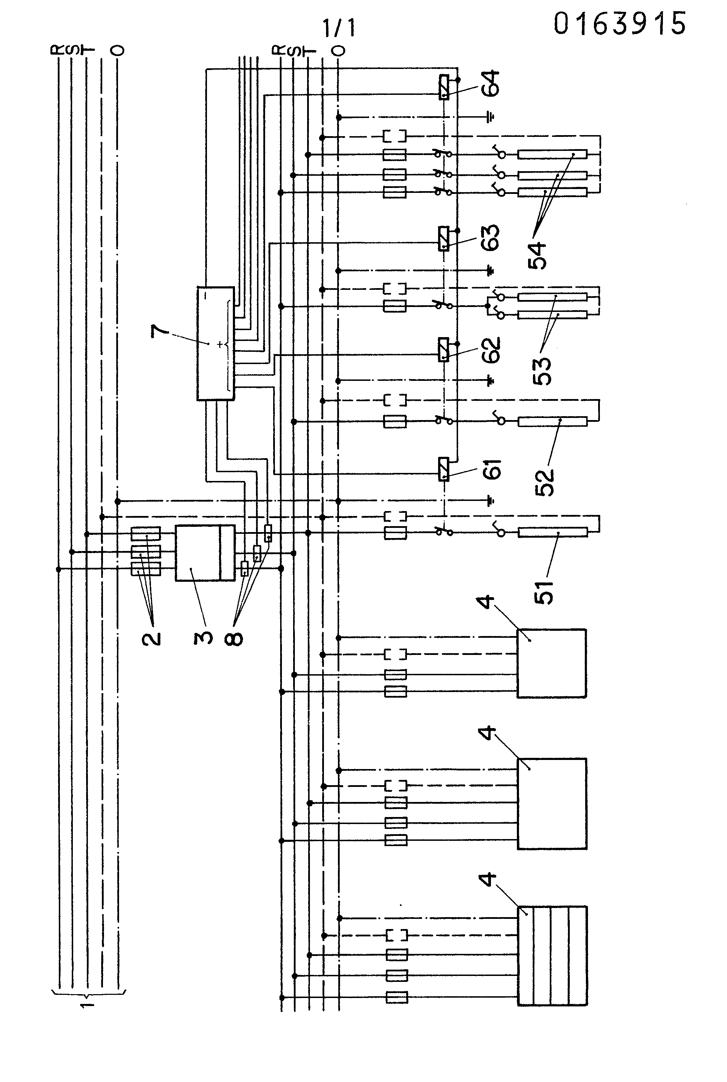

In der Zeichnung bezeichnet die Hinweisziffer 1 das öffentliche Stromversorgungsnetz, an dem die Hausinstallation über die Hauptsicherungen 2 angeschlossen ist, welche die beziehbare elektrische Leistung nach oben begrenzen. Die Hausinstallation weist neben einem Zähler 3 verschiedene elektrische Haushaltgeräte 4, wie Kochherd, Kühlschrank, Waschmaschine usw. auf, die in solcher Weise angeschlossen sind, dass sie während des ganzen Tages jederzeit eingeschaltet werden können. Daneben weist die Hausinstallation weitere Stromverbraucher von kleinerer Bedeutung auf, wie die Direktheizelemente 51 bis 54, die nach einer Rangordnung, entsprechend der Reihenfolge ihrer Hinweisziffern abfallend geordnet sind. Das Heizelement 51 hat erste Priorität und ist beispielsweise im Wohnzimmer installiert. Das Heizelement 52 hat zweite Priorität und ist beispielsweise im Esszimmer installiert, wogegen die Hinweisziffer 53 die in dritter Priorität stehenden Heizelemente der Schlafzimmer bezeichnet. Die Heizelemente 54 mit vierter Priorität dienen dem Beheizen von Garage, Bastelraum, Trockenraum usw. In die Speisestromkreise der Heizelemente 51 bis 54 ist je ein Schütze 61 bis 64 geschaltet, der von einem Steuergerät 7 betätigt wird. Das Steuergerät 7 detektiert mittels Strommessrelais 8 laufend die vom Stromversorgungsnetz 1 auf den drei Phasen RST bezogene Leistung.

Bei einem Grenzwert, der gleich oder kleiner als die durch
die Hauptsicherungen 2 festgelegte Leistungsgrenze ist,
schaltet das Steuergerät 7 die Stromverbraucher 51 bis 54
in umgekehrter Reihenfolge ihrer Rangordnung ab, bis die
mit den Strommessrelais 8 festgestellte Leistung gleich
oder kleiner dem durch die Hauptsicherungen 2 bestimmten
Grenzwert ist. Im vorliegenden Fall werden zuerst die
Heizelemente 54 abgeschaltet. Ist der Strombezug dennoch
zu hoch, werden die Heizelemente 53 ebenfalls abgeschaltet und sofern erforderlich ebenfalls die Heizelemente
52 und 51. Werden danach eines oder mehrere der Haushaltgeräte 4 abgestellt und sinkt dadurch der Strombezug aus
dem Netz, schaltet das Steuergerät 7 die Verbraucher 51
bis 54 in der Reihenfolge ihrer Rangordnung wieder zu, bis
die bezogene elektrische Leistung wieder gleich oder kleiner dem durch die Hauptsicherungen 2 festgelegten Grenzwert ist.

Um einen Temperaturabfall in den durch die Heizelemente 51 bis 54 beheizten Räumen zu vermeiden, können
einzelne oder alle der Heizelemente mit Kurzzeitspeichern,
wie z.B. Paraffinspeichern ausgerüstet sein, in denen
das Paraffin während den Heizzeiten schmilzt und während
den Ausschaltzeiten jeweils erstarrt und dabei ihre Erstarrungs- oder Latentwärme an den Raum abgeben.

Patentansprüche

1. Elektrische Hausinstallation mit einem Netzanschluss und mit mehreren Verbrauchern, wie Lichtquellen, Haushaltgeräte und Heizkörper, dadurch gekennzeichnet, dass die Verbraucher einzeln oder in mehrere Gruppen zusammengefasst und je über parallel angeordnete Schaltschütze am Netzanschluss angeschlossen sind, dass jeder Schaltschütze mit seinem Steuereingang an einen zugeordneten Ausgang einer die Leistung am Netzanschluss detektierenden Steuereinrichtung angeschlossen ist, deren Ausgänge in abfallender Rangordnung geordnet sind, und dass die Steuereinrichtung beim Ueber- oder Unterschreiten eines Leistungsgrenzwertes beim Netzanschluss die Verbraucher bzw. die Verbrauchergruppen entgegengesetzt der Reihenfolge der Rangordnung ab- bzw. zuschaltet.

2. Elektrische Hausinstallation nach Anspruch 1, dadurch gekennzeichnet, dass die Schaltschütze der Heizkörper bzw. Heizkörpergruppen in Steuerverbindung mit den Steuerausgängen niedrigster Rangordnung verbunden sind.

3. Elektrische Hausinstallation nach Anspruch 2, dadurch gekennzeichnet, dass mindestens ein Teil der Heizkörper mit Wärmespeicherelementen versehen sind.

0163915

1/1